# EUROPEAN PATENT APPLICATION

(11) **EP 0 869 158 A2**
(43) Date of publication of application: **07.10.1998**
(21) Application number: 98105717.7
(22) Date of filing: 30.03.1998
(51) Int. Cl.: C09D 5/38, C09D 5/02

(54) **Water borne metallic basecoat kit composition using a solvent borne metallic paste for long term aluminum storage**

(30) Priority: 01.04.1997 US 834694
(71) Applicant: BASF CORPORATION, Mount Olive, New Jersey 07828-1234 (US)
(72) Inventor: Wallace, Brent, Toledo, Ohio 43615 (US); Salter, Keith, Waterville, Ohio 43566 (US); Guyomard, Daniel, Lamorlaye (FR); Anderson, James, Howell, MI 48843 (US)
(74) Representative: Münch, Volker, Dr.

(57) **Abstract**

There is disclosed a water borne metallic basecoat kit composition that describes a method of storing the special effects pigments in a solvent enviroment in the form of a metallic paste. The metallic paste is then mixed with a water borne acrylic latex clear to form the desired water borne metallic base. The final water borne metallic basecoat coating composition is made by mixing a water borne metallic base, a water borne pigmented base and a water borne reducer base. The final coating has excellent appearance and is compliance with current and proposed organic compound regulations. This method of storing special effect metallic pigments can also be used in a great many of the currently available solvent borne refinish systems as a method of storing and delivering special effect metallic pigments in a convenient shelf stable package.

## Description

### FIELD OF INVENTION

The present invention is concerned with a coating composition designed for the coating of transportation vehicles. The invention is related to coating compositions primarily for a base coat of a multi-coat system which includes primers and transparent clear coats, particularly with base coats containing metallic pigments, based on water borne acrylic latex polymers. Also described is the storage of metallic pigments in a paste containing a minimum amount of water and the method of producing both water borne and solvent borne metallic bases from the solvent borne metallic paste.

### BACKGROUND AND PRIOR ART

Related automotive paint compositions of this type are disclosed in U.S. patent applications titled METALLIC WATER BORNE BASE COAT COMPOSITION BASED ON ACRYLIC LATEX RESINS USING A WATER REDUCIBLE RESIN FOR ALUMINUM STORAGE AND A PREGELLED HECTRORITE CLAY FOR RHEOLOGY CONTROL Ser. No. 553,065 filedJuly13, 1990, METALLIC WATER BORNE BASE COAT COMPOSITION BASED ON ACRYLIC LATEX RESINS USING A WATER REDUCIBLE RESIN FOR ALUMINUM STORAGE AND A TREATED HECTORITE CLAY FOR RHEOLOGY CONTROL Ser. No. 553, 063 filed July 13, 1990, METALLIC WATER BORNE BASE COAT COMPOSITION BASED ON ACRYLIC LATEX RESINS USING AN ACRYLIC RESIN HAVING ACID AND NONIONIC FUNCTIONALITY FOR ALUMINUM STORAGE AND A PREGELLED HETORITE CLAY FOR RHEOLOGY CONTROL Ser. No. 554,606 filed July 13, 1990, METALLIC WATER BORNE BASE COAT COMPOSITION BASED ON ACRYLIC LATEX RESINS USING AN ACRYLIC RESIN HAVING ACID AND NONIONIC FUNCTIONALITY FOR ALUMINUM STORAGE AND A TREATED HETORITE CLAY FOR RHEOLOGY CONTROL Ser. No. 553,100 filed July 13,1990, METALLIC WATER BORNE BASE COAT COMPOSITION BASED ON ACRYLIC LATEX RESINS AND ACRYLIC RESINS DERIVED FROM ACRYLIC MONOMERS HAVING NONIONIC URETHANE AND ACID FUNCTIONALITY FOR ALUMINUM STORAGE AND A PREGELLED HECTORITE CLAY FOR RHEOLOGY CONTROL Ser. No. 553,069 filed July 13, 1990, METALLIC WATER BORNE BASE COAT COMPOSITION BASED ON ACRYLIC LATEX RESINS AND ACRYLIC RESINS DERIVED FROM ACRYLIC MONOMERS HAVING NONIONIC, URETHANE AND ACID FUNCTIONALITY FOR ALUMINUM STORAGE AND A TREATED HECTORITE CLAY FOR RHEOLOGY CONTROL Ser. No. 553,070 filed July 13, 1990 , METALLIC WATER BORNE BASE COAT COMPOSITION BASED ON ACRYLIC LATEX RESINS USING ACRYLIC RESINS DERIVED FROM VINYL MONOMERS HAVING NONIONIC AND URETHANE FUNCTIONALITY FOR ALUMINUM STORAGE AND A PREGELLED HECTORITE CLAY FOR RHEOLOGY CONTROL Ser. No. 553,066 filed July 13, 1990, METALLIC WATER BORNE BASE COAT COMPOSITION BASED ON ACRYLIC LATEX RESINS USING ACRYLIC RESINS DERIVED FROM VINYL MONOMERS HAVING NONIONIC AND URETHANE FUNCTIONALITY FOR ALUMINUM STORAGE AND A TREATED HECTORITE CLAY FOR RHEOLOGY CONTROL Ser. No. 553,067 filed July 13, 1990, METALLIC WATER BORNE BASECOAT COMPOSITION BASED ON ACRYLIC LATEX RESINS USING ACRYLIC RESINS DERIVED FROM GRAFTING AN ISOCYANATE ADDUCT HAVING URETHANE AND NONIONIC FUNCTIONALITY ON TO AN ACRYLIC RESIN HAVING ACTIVE HYDROGEN FUNCTIONALITY FOR ALUMINUM STORAGE AND A PREGELLED HECTORITE CLAY FOR RHEOLOGY CONTROL Ser. No. 553,064 filed July 13, 1990, METALLIC WATER BORNE BASECOAT COMPOSITION BASED ON ACRYLIC LATEX RESINS USING ACRYLIC RESINS DERIVED FROM GRAFTING AN ISOCYANATE ADDUCT HAVING URETHANE AND NONIONIC FUNCTIONALITY ON TO AN ACRYLIC RESIN HAVING ACTIVE HYDROGEN FUNCTIONALITY FOR ALUMINUM STORAGE AND A TREATED HECTORITE CLAY FOR RHEOLOGY CONTROL Ser. No. 553,068 filed July 13, 1990, and ACRYLIC LATEX METALLIC WATER BORNE BASE COAT OF IMPROVED APPEARANCE Ser. No. 07/355,959 filed May 23, 1989.

It is customary in the painting of an automobile that a series of coatings be applied to the substrate. The first coat being the primer followed by the base coat and finally the clear coat. The base coat provides the good decorative quality to the final finish via organic and inorganic pigments. In many automobile finishes, a metallic finish is desired. To obtain this metallic effect, metallic pigments are present in the base coat, typically aluminum flakes. The aluminum flakes in the base coat contribute to the glossy lustrous appearance of the final finish.

Another feature that aluminum flakes contribute to the appearance of the final finish is the change of brightness as the viewing angle is changed. Typically, the final finish is bright when viewed at a 90 degree angle, however, when the viewing angle is changed to 180 degrees, the coating has a dark appearance. This phenomenon is known as "flop" in the automotive field and is highly desired. The ultimate in "flop" is achieved when the aluminum flakes are orientated parallel to the substrate. Random orientation of the aluminum flake results in a final finish exhibiting bright and dark areas when viewed at 90 degrees. This appearance is known as mottling and detracts from the final appearance of the final finish. In general, the metal fixation in water borne base coats is achieved by a rheology modifiers such as inorganic and organic thickeners. The particular rheology control agent used in this invention results in a non-mottled, high head-on-brightness, outstanding flop, and high quality finish, even in the case of a silver metallic base coat. Also, use of this particular rheology control agent allows the coating to be applied drier during the application process.

In the current market place, automobile coatings, especially base coats, contain a high level of organic solvent. With increasing concern about the volatile organic emissions into the atmosphere, an intensive effort in research and development of coatings containing mainly water as the solvent with a small level of organic solvent is under way. An example of such an effort is U.S. Patent No. 4,730,020 which discloses a water-dilutable coating composition comprising specifically selected acrylic copolymers, solvent blends, coloring and/or optical effect pigments and polymer dispersions. To obtain the desired optical effect of the metallic flakes, the correct combination of acrylic copolymer and solvent blend must be achieved. An aqueous thermosetting acrylic resin described by U.S. Patent No. 3,862,071 controls the metallic pigment orientation by the addition of a water insoluble copolymer. Microgel technology as described by GB-PS No. 2,073,609 also results in the proper metal orientation. Also disclosed in DE No. 3,210,051 is an attempt to control metallic pigment orientation using polyurethane dispersions. Cellulosic esters have also been used to control metal fixation as disclosed in DE No 3,216,549.

The rheology modifiers or rheology control agents for water borne coatings have poor shelve stability, poor weathering characteristics and are cumbersome to use. The particular rheology control agent used in this invention results in a non-mottled, high head-on-brightness, outstanding flop, and high quality finish, even in the case of a silver metallic base coat and does not suffer from the problems cited earlier.

The use of acrylic latex resin in a base coat formulation has been disclosed in European Application 0 287 144 A1, however, this application does not disclose any rheology control agents, pigment dispersion procedures, method for aluminum storage and requires that the acrylic latex resin be prepared in 2 or more steps by emulsion polymerization.

A major problem that must be overcome with water borne basecoat kits is the introduction of aluminum flakes into an aqueous environment. Aluminum flakes and water react to generate hydrogen gas and aluminum oxide. The hydrogen gas represents a major hazard in a closed container and aluminum oxide dulls the aluminum flake. Therefore, the aluminum flake must be segregated from the rest of the water borne components to minimize this hazard. A solution to this problem is a highly concentrated, solvent borne metallic paste that is stable for long periods of time that can be added to an aqueous dispersion of resin, other additives and other solvents to form an water borne aluminum base or tint that can be used in the basecoat kit. This solution would also allow the formulation of water borne basecoats having a VOC of less than .3 kg/l (2.5 lbs/gal).

### SUMMARY OF INVENTION

This invention relates to compositions for use in metallic water borne and metallic solvent borne basecoats in a multicoat system for the finishing and refinishing of automobiles, trucks and buses. Typically, a basecoat coating composition for the automotive refinishing market are prepared from a kit. A basecoat kit is composed essentially of several bases or tints that, generally, contain one to five different pigments resulting in the desired color characteristic for the base or tint. The pigments contained in the described bases or tints may consist essentially of aluminum flakes, mica flakes, organic pigments, inorganic pigments and other pigments leading to interesting metallic effects.

The instant invention is concerned with a water borne acrylic latex basecoat composition formed from a basecoat kit wherein the aluminum flakes are stored in a solvent borne metallic paste that is mixed with an water borne acrylic latex clear dispersion to form an aluminum flake base or tint. The outstanding metal control exhibited by this coating composition is attributed to the rheology control agent, the film shrinkage of the acrylic latex resin while drying and the wax.

The use of acrylic latex results in a very fast dry time. This water borne basecoat kit composition provides a basecoat composition having a volatile organic compound (VOC) content of less than 2.5 lbs/gal.

This invention describes 1) a composition of a solvent borne metallic paste that is stable for extended periods of time and 2) a method of introducing this solvent borne metallic paste into both an aqueous and nonaqueous environments. This method minimizes the potential hazard of the aluminum flakes reacting with water to form hydrogen gas and dulling of the aluminum flakes during storage. This method can also be used for the storage of other water sensitive pigments such as copper and brass. Other pigments plastic films, mica and coated metallic foils can be stored using this method.

The water borne automotive metallic basecoat kit composition comprises three basic bases or tints; 1) water borne metallic base or tint containing metallic flake, 2) water borne pigmented base or tint containing organic and/or inorganic pigments and 3) water borne reducer base containing rheology control agents.

The water borne metallic base or tint is composed essentially of metallic flakes at a level of about 0.1 to 20% by weight of the base, an acrylic latex film forming vehicle at a level of about 5-50% by weight of the base, preferably 15-50% by weight of the base, water reducible resin at a level of about 0.1 to 20% by weight of the base, a wax composed essentially of ethylene and/or ethylenically unsaturated monomers having a particle size of 0.01 to 50 microns, preferably 0.01 to 20 microns at a level of about 0.1 to 20.0% by weight of the base and organic solvents at a level of about 0.1 to 30% by weight of the base.

The above described water borne metallic base is produced by combining a solvent borne metallic paste with a water based acrylic latex clear. The solvent borne metallic paste is composed essentially of metallic flakes at a level of about 0.1 to 60% by weight of the paste, a water reducible resin neutralized at a level of about 0.1 to 60% by weight, organic solvents at a level of about 0.1 to 60% by weight of the paste, a wax composed essentially of ethylene and/or ethylenically unsaturated monomers having a particle size of 0.01 to 50 microns at a level of about 0.1 to 20% by weight of the base and other conventional paint additives dispersing aids, anti-settling aids, wetting aids, thickening agents, extenders, plasticizers, stabilizers, light stabilizers, antifoams, defoamers, and catalysts singly or a multitude of them at the conventional levels.

The water based acrylic latex clear base is composed essentially of acrylic latex film forming vehicle at a level of about 5-50% by weight of the clear, a wax composed essentially of ethylene and/or ethylenically unsaturated monomers having a particle size of 0.01 to 50 microns, preferably 0.61 to 20 microns at a level of about 0.1 to 20.0% by weight of the clear and organic solvents at a level of about 0.1 to 30% by weight of the clear.

The water borne metallic base or tint is prepared by combining the appropriate amount of solvent borne metallic paste with appropriate amount of the water borne acrylic latex clear base. The resulting mixture is then agitated for 5 to 10 minutes using a typical mixing rack used in the refinish market place or by hand. Such mixing equipment used in the automobile refinish market is described in U.S. Patents 4,580,399 and 4,407.

By binder we mean the nonvolatile portion of the resinous vehicle of a coating, in particular reference is given to Paint & Coatings Dictionary, Published by The Federation of Societies for coatings Technology, 1978. By solids we mean the nonvolatile matter in a coating composition left behind after drying, in particular reference is given to Paint & Coatings Dictionary, Published by the Federation of Societies for Coatings Technology, 1978.

The water borne pigmented base contains acrylic latex grinding polymer and acrylic latex film forming vehicle at a level of about 5-50%, preferably 15-50%. This level depends on the pigment in the component. The level of pigment in the water borne pigmented base is 0.5-35% by weight, this level depends on the pigment characteristics also. Typically, a pigment to binder weight ratio of about 10/100 to 300/100 is acceptable. The pigments are typically ground using conventional dispersion equipment sand mills, pearl mills, ball mills, horizontal mills, and vertical mills. Optional wetting agents, surfactants, and dispersing aids can be employed. This component may also contain a wax composed essentially of ethylene and/or ethylenically unsaturated monomers like alkyl (meth)acrylates, e.g. methyl (meth)acrylate, ethyl (meth)acrylate, propyl (meth)acrylate, 2-propyl (meth)acryl.ate, butyl (meth)acrylate, 2-butyl(meth)acrylate, 2-methylpropyl (meth)acrylate, t-butyl (meth)acrylate, 2-ethylhexyl (meth)acrylate, cyclohexyl (meth)acrylate, lauryl (meth)acrylate, octyl (meth)acrylate, decyl (meth)acrylate, stearyl (meth)acrylate, dicyclopentadienyl (math)acrylate, and isobornyl (meth)acrylate; aryl monomers, e.g. styrene, alpha-methyl styrene, vinyl toluene, t-butyl styrene, benzyl (meth)acrylate, and 2-benzylethyl (meth)acrylate; hydroxy monomers, e.g. hydroxyethyl (meth)acrylate, hydroxypropyl (meth)acrylate, hydroxybutyl (meth)acrylate, sec-hydroxybutyl (meth) acrylate, and hydroxyoctyl (meth)acrylate; and acid functional monomers, e.g. acrylic acid, methacrylic acid, maleic acid, and itaconic acid. Typically, the particle size of the wax particle in the final dispersion is 0.01 microns to 50 microns, preferably 0.01 to 20.0 microns. The wax is dispersed by conventional techniques or emulsified in to water and then introducted into the resin system. The proper amount of the wax dispersion is then added to the water borne pigmented base. The pH of the water borne pigmented base can be adjusted using ammonia or any water soluble primary amines, secondary amines, tertiary amines, polyamines and hydroxyamines, ethanolamine, diethanolamine, triethanolamine, n-methylethanol amine, N,N-diethylethanolamine, N-aminoethanolamine, N-methyldiethanolamine, monoisopropanolamine, diisopropanolamine, triisopropanolamine, hydroxylamine, butanolamine, hexanolamine, methyl diethanolamine, N,N-diethylaminoethylamine, ethylene diamine, diethylene triamine, diethylene tetraamine, hexamethylene tetramine, triethylamine, dimethylethanolamine and the like. The preferred base is ammonia.

The water borne pigmented base has a total solids level of 5-60% by weight, a total pigment level of 0.0-45% by weight, a total organic solvent level of 0-25% by weight, a total binder of 20-60% by weight, a total wax level of 0-20% by weight, a total water level of 40-95% by weight and a pH range of 7-10.

The water borne reducer base contains an aqueous solution of; 1) synthetic sodium lithium magnesium silicate hectorite clay at a level of about 0.1 to 10% by weight, preferably 0.5 to 3.0% by weight, 2) polypropylene glycol at a level of about 0.1 to 2.0% by weight, preferably 0.1 to 1.0% by weight, 3) a water reducible resin at a level of about 0.0 to 25.0% by weight, 4) water miscible solvent at a level of about 0-25% by weight, 5) a wax level of about 0 to 10% by weight, and 5) a water level of 50-99.9% by weight.

The coating composition can be applied using conventional spray equipment or high volume low pressure spray equipment resulting in a high quality finish. After application, the composition is dried at ambient temperatures but can be baked at about 35-80 degree C for about 5-45 minutes to form a coating layer about 0.254-5.08 microns (0.1-2.0 mils) thick.

### DESCRIPTION OF INVENTION

This invention is directed to a coating composition for a water borne basecoat for the automotive finishing and refinishing of automobiles, trucks, and buses. The coating composition is prepared from a basecoat kit which consists of water borne metallic bases, water borne pigmented bases and a water borne reducer base that are combined to give the final water borne basecoat paint composition. This invention describes a method for the long term storage of that aluminum flakes in a highly concentrated solvent borne metallic paste. This highly concentrated solvent borne metallic paste is then mixed with a water borne acrylic latex clear to produce the water borne metallic base or tint used in the basecoat kit. The highly concentrated solvent borne metallic paste has very good stability over long periods of time. The water borne metallic base has sufficent stability for use in the automobile refinish market.

The highly concentrated, solvent borne metallic paste is composed essentially of metallic flakes at a level of about 0.1 to 60% by weight of the paste, preferably at a level of about 35 to 60%, a neutralized water reducible resin at a level of about 0.1 to 60% by weight, preferably 20 to 50%, organic solvents at a level of about 0.1 to 60% by weight of the paste, preferably at a level of about 5 to 30%, a wax composed essentially of ethylene and/or ethylenically unsaturated monomers having a particle size of 0.01 to 50 microns at a level of about 0.1 to 20% by weight of the base. Typical properties of this wax are as follows:

| | |
|---|---|
| Acid Number (mg KOH/g) | 0-50 |
| Hardness, dmm (ASTM D-5) | <2.0 |
| Mettler Drop Point, C (ASTM D-3104) | 100-150 |
| Particle Size, micron | 0.01 to 10.0 |
| Hydroxyl Number | 0-50 |

Typically, the wax is dispersed by conventional techniques in to the resin system.

The solvent borne metallic paste can be prepared using mixers designed for handling high vicosity pastes such as single planetary mixers, double planetary mixers, ribbon blender, kneader extruder, cone screw mixers, sigma blade mixers and plow blade mixers.

Other conventional paint additives dispersing aids, anti-settling aids, wetting aids, thickening agents, extenders, plasticizers, stabilizers, light stabilizers, antifoams, defoamers, and catalysts singly or a multitude of them can be used at the conventional levels.

Commonly used metallic pigments, used singularly, or as a mixture are copper, copper alloys, aluminum, stainless steel, nickel flakes, glass flakes, dyed pigmented or coated glass flakes, mica, coated mica, flaked or ground graphite, plastic films, dyed pigmented or coated plastic films, resinous flakes, dyed pigmented or coated resinious flakes, flaked pigments and or their raw forms, and coated metallic foils, preferably aluminum flake. The aluminum flake can either be conventional aluminum flake or treated aluminum flake for hydrolytic stability. The invention apply generally to all colorants and materials showing special effect in metallic apperance in paint and particularly for those having a potential for reacting with water.

The water reducible resins can be selected from the group consisting essentially of acrylic, alkyds, acrylic modified alkyds, polyurethane modified alkyds, polyester, polyurethane, grafted acrylic polyurethane and acrylic containing urethane resins. The solvent borne water reducible resin should have an acid number of 10 to 150 mg KOH/g of solid resin, a hydroxyl number of 0 to 120, a molecular weight of 2,000 to 100,000 number average, Tg range of -40 degree C to 50 degree C. The acid groups of the resin are neutralized with an amine. The amine can be selected from the group consisting essentially of ammonia, diethyl amine, triethyl amine, ethanolamine, diethanolamine, triethanolamine, N-methylethanol amine, N,N diethylethanolamine, N-aminoethanolamine, N-methyldiethanolamine, monoisopropanolamine, diisopropanolamine, triisopropanolamine, hydroxylamine, butanolamine, hexanolamine, methyl diethanolamine, N,N-diethylaminoethylamine, ethylene diamine, diethylene triamine, diethylene tetraamine, hexamethylene tetramine, triethylamine, dimethylethanolamine and the like.

The organic solvent can be selected from the group consisting essentially of methyl ethyl ketone, acetone, ethanol, methanol, propanol, butanol, N-methylpyrrolidone, naphthas, 2,2,4-trimethyl-1,3-pentanediol monoisobutyrate, glycols, glycol ethers, glycol acetates, diethylene glycol ethers, diethylene glycol acetates, propylene glycol ethers, propylene glycol acetates, dipropylene glycol ethers, dipropylene glycol acetates, specially preferred are ethylene glycol propyl ether, ethylene glycol butyl ether, ethylene glycol hexyl ether, propylene glycol methyl ether, propylene glycol ethyl ether, propylene glycol propyl ether, propylene glycol butyl ether, propylene glycol t-butyl ether, propylene glycol hexyl ether, dipropylene glycol methyl ether, dipropylene glycol ethyl ether, dipropylene glycol propyl ether, methyl ethyl ketone and dipropylene glycol butyl ether and the like.

The water based acrylic latex clear has a total solids level of 5-60% by weight, a total organic solvent level of 0-25% by weight, a total binder of 20-60% by weight, a total water level of 40-95% by weight, a total wax level of 0-20% by weight and a pH range of 7-10. The pH of the base can be adjusted using ammonia or other water soluble primary amines, secondary amines, tertiary amines, polyamines and hydroxyamines, ethylamine, diethylamine, triethylamine, dimethylethanolamine, ethanolamine, diethanolamine, triethanolamine, N-methylethanol amine, N,N diethylethanolamine, N-aminoethanolamine, N-methyldiethanolamine, monoisopropanolamine, diisopropanolamine, triisopropanolamine, hydroxylamine, butanolamine, hexanolamine, methyl, diethanolamine, N,N-diethylaminoethylamine, ethylene diamine, diethylene triamine, diethylene tetraamine, hexamethylene tetraamine, triethylamine and the like.

The resin used in the water borne clear is an acrylic latex. Typical properties of this acrylic latex are as follows:

| | |
|---|---|
| Solids content, % | 20-60 |
| pH | 7 to 10 |
| Weight per Liter kg/l (per gallon lbs/gallon) | 0.96 to 1.08 (8.0 to 9.0) |
| Minimum film formation temperature, degree C | 0 to 70 |
| Sward hardness | 25 to 110 |
| Mechanical stability | OK |
| Glass transitition temperature, degree C | 10 to 50 |
| Average molecular weight | 150,000 to 300,000 |
| Number average molecular weight | 30,000 to 60,000 |
| Acid number on solids | 5 to 80 |
| Hydroxyl number on solids | 0 to 120 |
| Volatile organic solvents, | 0 to 20 |
| Particle size, nm | 50 to 150 |

Especially preferred acrylic lattices are Neocryl A-622, Neocryl A-640, Neocryl A-6037 sold by ICI Resins, Joncryl J-537, Joncryl J-538 sold by Johnson Wax, Arolon 860-W-45 sold by NL Industries. Other acrylic latex resins can be used according to this invention. The level of this resin in the water based acrylic latex clear is 15-60% by weight, preferably 20-40% by weight. This clear may also contain a wax composed essentially of ethylene and/or ethylenically unsaturated monomers like alkyl (meth)acrylates, e.g. methyl (meth)acrylate, ethyl (meth)acrylate, propyl (meth)acrylate, 2-propyl (meth)acrylate, butyl (meth)acrylate, 2-butyl(meth)acrylate, 2-methylpropyl (meth)acrylate, t-butyl (meth)acrylate, 2-ethylhexyl (meth)acrylate, cyclohexyl (meth)acrylate, lauryl (meth)acrylate, octyl (meth)acrylate, decyl (meth)acrylate, stearyl (meth)acrylate, dicyclopentadienyl (meth)acrylate, and isobornyl (meth)acrylate; aryl monomers, e.g. styrene, alpha-methyl styrene, vinyl toluene, t-butyl styrene, benzyl (meth)acrylate, and 2-benzylethyl (meth)-acrylate; hydroxy monomers, e.g. hydroxyethyl (meth)acrylate, hydroxypropyl (meth)acrylate, hydroxybutyl (meth)acrylate, sec-hydroxybutyl (meth)acrylate, and hydroxyoctyl (meth)acrylate; and acid functional monomers, e.g. acrylic acid, methacrylic acid, maleic acid, and itaconic acid. Typically, the particle size of the wax particle in the final dispersion is 0.01 micron to 50 micron, preferably 0.01 micron to 20.0 micron. Typical properties of this wax are as follows:

| | |
|---|---|
| Acid Number (mg KOH/g) | 0-50 |
| Hardness, dmm (ASTM D-5) | <2.0 |
| Mettler Drop Point, C (ASTM D-3104) | 100-150 |
| Particle Size, micron | 0.01 to 10.0 |
| Hydroxyl Number | 0-50 |

Typically, the wax is dispersed by conventional techniques in to the resin system to the desired particle size or prepared by emulsion techniques in water. The proper amount of the wax dispersion is then added to the water borne acrylic latex clear. This clear may also contain other conventional paint additives dispersing aids, anti-settling aids, wetting aids, thickening agents, extenders, plasticizers, stabilizers, light stabilizers, antifoams, defoamers and catalysts singly or a multitude of them at the conventional levels. Also present in this component is an organic solvent selected from the group consisting of methyl ethyl ketone, acetone, ethanol, methanol, propanol, butanol, N-methylpyrrolidone, naphthas, 2,2,4-trimethyl-1,3-pentanediol monoisobutyrate, glycols, glycol ethers, glycol acetates, diethylene glycol ethers, diethylene glycol acetates, propylene glycol ethers, propylene glycol acetates, dipropylene glycol ethers, dipropylene glycol acetates, specially preferred are ethylene glycol propyl ether, ethylene glycol butyl ether, ethylene glycol hexyl ether, propylene glycol methyl ether, propylene glycol ethyl ether, propylene glycol propyl ether, propylene glycol butyl ether, propylene glycol hexyl ether, dipropylene glycol methyl ether, dipropylene glycol ethyl ether, dipropylene glycol propyl ether and dipropylene glycol butyl ether at a level of about 0-25% by weight, preferably 0-12% by weight.

Typical rheology control agents and thickeners such as polyacrylic acid, clays Bentone, treated clays, cellulosics, polysaccharides, urethanes or mixtures thereof can also be added to the water based acrylic clear base to control the viscosity of the base. The preferred thickeners are polyacrylic acid such as ASE-60, TT-6151 TT-935 supplied by Rohm & Haas, HV-30 supplied by Allied Colliods, Rheolate 1 supplied by Rheox and urethane thickeners such as Rheolate 255, Rheolate 278 supplied by Rheox, RM-825, RM-1025, QR-708 supplied by Rhom & Haas. The water borne clear can contain a thickener at a level of about about 0.1 to 30% by weight of the clear.

The water borne pigmented base imparts the coloring effect upon the coating composition. The resin used for the dispersing of the pigments is an acrylic latex. Typical properties of this acrylic latex are as follows:

| | |
|---|---|
| Solids content, % | 20-60 |
| pH | 7 to 10 |
| Weight per Liter kg/l (per Gallon lbs/gallon) | 0.96 to 1.08 (8.0 to 9.0) |
| Minimum film formation temperature, degree C | 0 to 70 |
| Sward hardness | 25 to 110 |
| Mechanical stability | OK |
| Glass transitition temperature, degree C | 10 to 50 |
| Average molecular weight | 150,000 to 300,000 |
| Number average molecular weight | 30,000 to 60,000 |
| Acid number on solids | 5 to 80 |
| Hydroxyl number on solids | 0 to 120 |
| Volatile organic solvents, % | 0 to 20 |
| Particle size, nm | 50 to 150 |

Especially preferred acrylic lattices are Neocryl A-622, Neocryl A-640, Neocryl A-6037 sold by ICI Resins, Joncryl J-537, Joncryl J-538 sold by Johnson Wax, Arolon 860-W-45 sold by NL Industries. Other acrylic latex resins can be used according to this invention. The level of this resin in the water borne pigmented base is 15-60% by weight, preferably 20-40% by weight. The organic, inorganic pigments and/or dyestuffs are ground with this resin employing standard techniques. Examples of dispersing equipment are ball mills, pebble mills, pearl mills, horizontal mills, and vertical mills. Examples of pigments and dyestuffs but not limited to are titanium dioxide, graphite, carbon black, zinc oxide, cadmium sulfide, chromium oxide, zinc sulfide, zinc chromate, strontium chromate, barium chromate, lead chromate, lead cyanamide, lead silico chromate, chromium oxide, zinc sulfide, yellow nickel titanium, yellow chromium titanium, red iron oxide, transparent red iron oxide, transparent yellow oxide, black iron oxide, ultramarine blue, phthalocyanine complexes, amaranth, quinacridones, and halogenated thioindigo pigments. The level of pigment/dyestuff in the water borne pigmented base is 0.0-45.0% by weight, typically 0-25%. This component may also contain a wax composed essentially of ethylene and/or ethylenically unsaturated monomers like alkyl (meth)acrylates, e.g. methyl (meth)acrylate, ethyl (meth)acrylate, propyl (meth)acrylate, 2-propyl (meth)acrylate, butyl (meth)acrylate, 2-butyl (meth)acrylate, 2-methylpropyl (meth)acrylate, t-butyl (meth)acrylate, 2-ethylhexyl (meth)acrylate, cyclohexyl (meth)acrylate, lauryl (meth)acrylate, octyl (meth)acrylate, decyl (meth)acrylate, stearyl (meth)acrylate, dicyclopentadienyl (meth)acrylate, and isobornyl (meth)acrylate; aryl monomers, e.g. styrene, alpha-methyl styrene, vinyl toluene, t-butyl styrene, benzyl (meth)acrylate, and 2-benzylethyl (meth)acrylate; hydroxy monomers, e.g. hydroxyethyl (meth)acrylate, hydroxypropyl (meth)acrylate, hydroxybutyl (meth)acrylate, sec-hydroxybutyl (meth)acrylate, and hydroxyoctyl (meth)acrylate; and acid functional monomers, e.g. acrylic acid, methacrylic acid, maleic acid, and itaconic acid. Typically, the particle size of the wax particle in the final dispersion is 0.01 micron to 50 micron, preferably 0.01 micron to 20.0 micron. Typical properties of this wax are as follows:

| | |
|---|---|
| Acid Number (mg KOH/g) | 0-50 |
| Hardness, dmm (ASTM D-5) | <2.0 |
| Mettler Drop Point, C (ASTM D-3104) | 100-150 |
| Particle Size, micron | 0.01 to 10.0 |
| Hydroxyl Number | 0-50 |

Typically, the wax is dispersed by conventional techniques into the resin system to the desired particle size or prepared by emulsion techniques in water. The proper amount of the wax dispersion is then added to the water borne pigmented base. This component may also contain other conventional paint additives dispersing aids, anti-settling aids, wetting aids, thickening agents, extenders, plasticizers, stabilizers, light stabilizers, antifoams, defoamers and catalysts singly or a multitude of them at the conventional levels. Also present in this component is an organic solvent selected from the group consisting of methyl ethyl ketone, acetone, ethanol, methanol, propanol, butanol, N-methylpyrrolidone, naphthas, 2,2,4-trimethyl-1,3-pentanediol monoisobutyrate, glycols, glycol ethers, glycol acetates, diethylene glycol ethers, diethylene glycol acetates, propylene glycol ethers, propylene glycol acetates, dipropylene glycol ethers, dipropylene glycol acetates, specially preferred are ethylene glycol propyl ether, ethylene glycol butyl ether, ethylene glycol hexyl ether, propylene glycol methyl ether, propylene glycol ethyl ether, propylene glycol propyl ether, propylene glycol butyl ether, propylene glycol hexyl ether, dipropylene glycol methyl ether, dipropylene glycol ethyl ether, dipropylene glycol propyl ether and dipropylene glycol butyl ether at a level of about 0-25% by weight, preferably 0-12% by weight.

The water borne pigmented base has a total solids level of 5-60% by weight, a total pigment level of 0.0-45% by weight, a total organic solvent level of 0-25% by weight, a total binder of 20-60% by weight, a total water level of 40-95% by weight, a total wax level of 0-20% by weight and a pH range of 7-10. The pH of the base can be adjusted using ammonia or other water soluble primary amines, secondary amines, tertiary amines, polyamines and hydroxyamines, ethylamine, diethylamine, triethylamine, dimethylethanolamine, ethanolamine, diethanolamine, triethanolamine, N-methylethanol amine, N,N-diethylethanolamine, N-aminoethanolamine, N-methyldiethanolamine, monoisopropanolamine, diisopropanolamine, triisopropanolamine, hydroxyamine, butanolamine, hexanolamine, methyl diethanolamine, N,N-diethylaminoethylamine, ethylene diamine, diethylene triamine, diethylene tetraamine,. hexamethylene tetraamine, triethylaamine and the like.

Typical rheology control agents and thickeners such as polyacrylic acid, clays Bentone, treated clays, cellulosics, polysaccharides, urethanes or mixtures thereof can also be added to the water borne pigmented base to control the viscosity of the base. The preferred thickeners are polyacrylic acid such as ASE-60, TT-615, TT-935 supplied by Rohm & Haas, HV-30 supplied by Allied Colliods, Rheolate 1 supplied Rheox and urethane thickeners such as Rheolate 255, Rheolate 278 supplied by Rheox, RM-825, RM-1025, QR-708 supplied by Rhom & Haas. The water borne pigmented base can contain a thickener at a level of about about 0.1 to 30% by weight of the base.

The water borne reducer base is an aqueous solution containing a dispersion of synthetic sodium lithium magnesium silicate hectorite clay, a polypropylene glycol, water borne resin and optionally wax. The typical properties of the synthetic sodium lithium magnesium silicate clay are as follows:

| | |
|---|---|
| Solids Content, % | 95-100 |

| Typical Analysis | |
|---|---|
| SiO2 | 50-65 |
| MgO | 25-35 |
| Li2O | 0.1-1.5 |
| Na2O | 1.5-3.5 |
| | 3.0-12.0 |
| Appearance | White free flowing powder |
| Particle Size | <2% greater than 250 microns |
| Surface Area, m²/g | 370s |

Especially preferred synthetic sodium lithium magnesium silicate hectorite clay is Laponite RD, available from Laporte, Inc. This hectorite clay is present in this component at a level of about 0.1-10% by weight, preferably 0.5-3.0% by weight. The hectorite clay can be dispersed in the aqueous medium by Cowles or agitation.

The polypropylene glycol is at a level of about 0.1-10% by weight. The molecular weight range of the polypropylene glycol is 435 to 3900.

This component may also contain water reducible resins, acrylic latex resins or combinations thereof at a level of about 0.0-45.0% by weight, preferably 0.0-25.0% by weight.

The water reducible resins can be selected from the group consisting essentially of acrylic, alkyds, acrylic modified alkyds, urethane modified alkyds, polyester, polyurethane, grafted acrylic polyurethane and acrylic containing urethane resins. The solvent borne water reducible resin should have an acid number of 10 to 150 mg KOH/g of solid resin, a hydroxyl number of 0 to 120, a molecular weight of 2,000 to 100,000 number average, Tg range of -40 degree C to 50 degree C. The acid groups of the resin are neutralized with an amine. The amine can be selected from the group consisting essentially of ammonia, diethyl amine, triethyl amine, ethanolamine, diethanolamine, triethanolamine, n-methylethanol amine, N,N-diethylethanolamine, N-aminoethanolamine, N-methyldiethanolamine, monoisopropanolamine, diisopropanolamine, triisopropanolamine, hydroxyamine, butanolamine, hexanolamine, methyl diethanolamine, N,N-diethylaminoethylamine, ethylene diamine, diethylene triamine, diethylene tetraamine, hexamethylene tetraamine, triethylamine, dimethylethanolamine and the like.

Typical properties of the acrylic latex in the water borne reducer base are as follows:

| | |
|---|---|
| Solids content, % | 20-60 |
| pH | 7 to 10 |
| Weight per Liter kg/i (per Gallon lbs/gallon) | 0.96 to 1.08 (8.0 to 9.0) |
| Minimum film formation temperature, degree C | 0 to 70 |
| Sward hardness | 25 to 110 |
| Mechanical stability | OK |
| Glass transitition temperature, degree C | 10 to 50 |
| Average molecular weight | 150,000 to 300,000 |
| Number average molecular weight | 30,000 to 60,000 |
| Acid number on solids | 5 to 80 |
| Hydroxyl number on solids | 0 to 120 |
| Volatile organic solvents, % | 0 to 20 |
| Particle size, nm | 50 to 150 |

Especially preferred acrylic lattices are Neocryl A-622, Neocryl A-640, Neocryl A-6037 sold by ICI Resins, Joncryl J-537, Joncryl J-538 sold by Johnson Wax, Arolon 860-W-45 sold by NL Industries. Other acrylic latex resins can be used according to this invention.

Also present in this component is an organic solvent selected from the group consisting of methyl ethyl ketone, acetone, ethanol, methanol, propanol, butanol, N-methylpyrrolidone, naphthas, 2,2,4-trimethyl-1,3-pentanediol monoisobutyrate, glycols, glycol ethers, glycol acetates, diethylene glycol ethers, diethylene glycol acetates, propylene glycol ethers, propylene glycol acetates, dipropylene glycol ethers, dipropylene glycol acetates, specially preferred are ethylene glycol propyl ether, ethylene glycol butyl ether, ethylene glycol hexyl ether, propylene glycol methyl ether, propylene glycol ethyl ether, propylene glycol propyl ether, propylene glycol butyl ether, propylene glycol hexyl ether, dipropylene glycol methyl ether, dipropylene glycol ethyl ether, dipropylene glycol propyl ether and dipropylene glycol butyl ether at a level of about 0-25% by weight, preferably 0-12% by weight.

The total water content of this component is 50-99.9% by weight.

The water borne reducer base can also contain wax. Typical properties of this wax are as follows:

| | |
|---|---|
| Acid Number (mg KOH/g) | 0-50 |
| Hardness, dmm (ASTM D-5) | <2.0 |
| Mettler Drop Point, C (ASTM D-3104) | 100-150 |
| Particle Size, micron | 0.01 to 10.0 |
| Hydroxyl Number | 0-50 |

The wax is emulsified into water at a particle size of 0.01 microns to 50.0 microns using conventional techniques. The level of wax in the water borne reducer base is 0 to 10% by weight of the base.

The water borne reducer base may also contain other conventional paint additives dispersing aids, anti-settling aids, wetting aids, thickening agents, extenders, plasticizers, stabilizers, light stabilizers, antifoams, defoamers and catalysts singly or a multitude of them at the conventional levels.

Other water reducible resins may be added to the coating to improve certain film properties such as aqueous one-component aliphatic polyurethane dispersions, aromatic polyurethane dispersions, polyesters, and alkyds.

Addition of acrylic acid and/or polyurethane based thickeners known to the art may also be added to achieve desired properties. The incorporation of metal oxides such as zinc oxide may also improve the physical properties of the final film by crosslinking with the acid groups on the resin system. Other modes of crosslinking the basecoat composition include carbodiimides and/or polyfunctional aziridines.

Additional anionic and nonionic surfactants can be added to the paint composition to increase wetting of the substrate by the coating such as FC-120, FC-430 sold by 3M, Surfynol 104, Surfynol 440 sold by Air Products, Triton X-100 sold by Rohm and Haas, Troysol LAC sold by Troy Chemical Company, Aerosol OT's sold by American Cyanamid including the salts of dialkyl sulfosuccinates and Igepal's sold by GAF including the ethoxylated alkyl phenols.

This base coat composition exhibits a very high viscosity at low shear rate while having a low viscosity at high shear rates. This phenomenon results in the outstanding metal effect this coating composition possesses. The efflux time of the coating through a #4 Ford cup is 10 to 30 seconds at 23 C.

The coating composition can be applied using conventional spray equipment or high volume low pressure spray equipment resulting in a high quality finish. Other modes of application are roller coating, brushing, sprinkling, flow coating, dipping, electrostatic spraying, or electrophoresis. Suitable substrates may be made of wood, metal, plastic and other synthetic material. After application, the composition is dried at ambient temperatures but can be baked at about 35-80 degree C for about 5-45 minutes to form a coating layer about 0.1-2.0 mils thick. After the coating has dried, a transparant clear coat can be applied over this basecoat. The preferred transparent clear coat is two component, based on acrylic and/or polyester resins cured with polyisocyanates. Other examples of cured transparent clear coats are acrylic and/or polyester resins cured with silanes, acrylic and/or polyester having acid functionality cured epoxy coatings, and acrylic and/or polyester resins having hydroxyl functionality cured with melamines, acrylic and/or polyester resins having acid functionallity cured with carbodiimides, however, this is not an inclusive list.

### PREFERRED EMBODIMENTS OF INVENTION

The following examples illustrate the invention without limiting the scope thereof.

### EXAMPLE 1: Preparation of Polyester

A reactor fitted with agitator, addition ports, reflux condenser, thermocouple probe, Barrett trap, and inert gas inlet was charged, under nitrogen (a low stream of nitrogen entering reactor through inert gas inlet), with the following commercially available materials: 17942 parts by weight Empol 1008 dimer fatty acid, 5150 parts by weight isophthalic acid, 9570 parts by weight 1,6-hexanediol, 437 parts by weight toluene. The reactor was heated to 132-142°C with agitation. A light stream of nitrogen continued to pass through the system. The batch heating was slowly continued to 150-158°C, collecting water condensate in the Barrett trap. After a temperature of about 150-158°C, toluene was prevented from returning to the batch and temperature allowed to rise. Condensate from ester formation continued to be collected keeping temperature below maximum of 210-220°C; acid number was checked at intervals. At about 5-6 acid number, heat was turned off and vacuum about 660.4 to 711.2 (about 26-28 inches) slowly applied to strip off the solvent and water remaining in batch (caution: material may foam) . After distillate rate substantially ceased, the vacuum was broken with nitrogen, and the batch cooled. Properties of the material were 4-5 acid number; viscosity and color when reduced to 81-82 percent non-volatile with methyl propyl ketone of U-W (Gardner-Holdt) and 1-2 (Gardner) respectively.

### EXAMPLE 2: Preparation of Polyurethane Polymer

### PART A:

A reactor fitted with agitator, addition ports, reflux condenser, thermocouple probe, and inert gas inlet was charged, under nitrogen (a low stream of nitrogen entering reactor through inert gas inlet), with 13018 g. of the (unreduced) polymer of EXAMPLE 1 (approximately 98% non-volatile) and the following commercially available materials: 1093 g. of dimethylol propionic acid, 189 g. neopentylglycol, 4499 g. urethane grade methyl ethyl ketone, and 5500 g. TMXDI (META) (tetra methyl xylene aliphatic diisocyanate from Cyanamid). The batch was heated to 89-92°C and maintained at that temperature range for four to five hours. The heat was turned off, nitrogen left at a trace flow, and the batch allowed to sit two to three days.

### PART B:

The batch was heated to 89-91°C and during this heating, a sample was removed from the batch (still under a trace of nitrogen) for isocyanate value determination. The batch was held at 89-91°C for about 2-3 hours, monitoring isocyanate value until it remained fairly constant at about 1.0-1.2 percent (the isocyanate value was reported an solution by back-titration of about a 2-4 g. sample dissolved in toluene, reacted with approximately .6 M dibutylamine, with an approximately .5 M HCl solution; acetone was used for the back-titration solvent after the isocyanate reaction). In addition, during the hold period, non-volatile was determined. Prior to adjustment the viscosity was 3.4-3.7 poise when reduced approximately 1:1 with N-methyl pyrrolidone (NMP) using an I.C.I. Cone and Plate viscometer set at 25°C. Approximately at least 11 g were removed for the various samplings.

Subsequently 530 g. of trimethylol propane was added to the batch (the temperature of which had dropped to 87°C). Also about 45 g. of methyl ethyl ketone was added (which was the amount which approximately adjusted it to theoretically 80-81 percent non-volatile prior to trimethylol propane addition using the non-volatile value obtained above).

### PART C:

The batch was held with enough heat to allow it to maintain a temperature of 87-92°C and viscosity checked through the hold (using the procedure described above with NMP) until a value of 12 to 15 poise was obtained. About a minimum of 20 g. of material was removed from the batch for samples in this Part. At 12 to 15 poise, 450 g. of ethanol was pumped into the bottom of the reactor, the reactor cooled to less than 81°C, nitrogen turned off, and allowed to agitate overnight. Subsequently 3527 g. of methyl ethyl ketone was added. To improve mixing, 426 g. were removed from the reactor.

### EXAMPLE 3: Preparation of Polyurethane Water Borne Dispersion

A reactor fitted with agitator, addition ports, reflux condenser, thermocouple probe, and inert gas inlet with a nitrogen flow was charged with was charged with 8003 g. of the material of EXAMPLE 2. The non-volatile was determined [with methyl isobutyl ketone and .2-.4 g. sample at 105-115°C for about 60 minutes (approximately 3 g were removed for this test)] to be 72-73 percent. The batch was heated to about 80-86°C and vacuum stripped at about 5.08 mm (.2 inches) of mercury gage (the nitrogen flow was turned off at about 56°C). After about 900-1000 g. of solvent were collected, 1273 g of Propasol M was added. Vacuum distillation continued, and temperature allowed to increase to about 90-93°C. The refractive index of the distillate was monitored until it was greater than 1.4010 at 20°C after which distillation was stopped.

The batch was heated to 100°C and 171.8 g of dimethyl amino ethanol was added. The batch was allowed to agitate with temperature between 93 and 110°C (for about 42 minutes) with the temperature remaining between 97-101°C most of the time.

Subsequently 11,419 g. of deionized water was added over about one hour. Temperature dropped to 84°C. The batch was cooled.

The properties of the resin were 31-32 percent non-volatile (.2-.4 g. sample, with an appropriate solvent such as water, for 60 minutes at 105-115°C); 24-26 acid number based on the above non-volatile, pH of 7.0-7.5. Differences between determined non-volatile and theoretical are likely the result of losses during processing.

### EXAMPLE 4: Preparation of Solvent Borne Polyurethane

### PART A:

A reactor fitted with agitator, addition ports, reflux condenser, thermocouple probe, and inert gas inlet was charged, under nitrogen (a low flow of nitrogen entering reactor through inert gas inlet), with 13,018 g of the (unreduced) polymer of EXAMPLE 1 (approximately 98% non-volatile) and the following commercially available materials: 1093 g of dimethylol propionic acid, 189 g neopentylglycol, 4457 g urethane grade methyl ethyl ketone, and 5500 g. TMXDI (META) (tetra methyl xylene aliphatic diisocyanate from Cyanamid). The batch was heated to 89-92°C and maintained at that temperature range for one to two hours. The heat was turned off, nitrogen left at a trace flow, and the batch allowed to sit overnight.

### PART B:

The batch was heated to 89-91°C and during this heating, a sample was removed from the batch (still under nitrogen) for isocyanate value determination. The batch was held at 89-91°C for about 6-7 hours, monitoring isocyanate value until it remained fairly constant at about 1.2-1.4 percent (the isocyanate value was reported on solution by back-titration of about a 2-4 g sample dissolved in toluene, reacted with approximately .2 M dibutylamine, with an approximately .1 M HCl solution; isopropanol was used for the back-titration solvent after the isocyanate reaction). The heat was turned off, nitrogen left at a trace flow, and the batch allowed sit overnight.

The batch was heated to 89-91°C and during this heating, a sample as removed from the batch (still under a trace of nitrogen) for non-volatile determination. The batch was held at 89-91°C for about 1-2 hours, monitoring isocyanate value until it remained fairly constant at about 1.1-1.3 percent.

Subsequently 558 g of trimethylol propane was added to the batch. Also about 334 g of methyl ethyl ketone (which was the amount approximately adjusting it to theoretically 80-81 percent non-volatile prior to trimethylol propane addition). Prior to adjustment the viscosity was 3.8-4.3 poise when reduced approximately 1:1 with N-methyl pyrolidone (NMP) using an I.C.I. Cone and Plate viscometer set at 25°C. Approximately a minimum of at least 16 g were removed for the various samples of this step.

### PART C:

The batch was held with enough heat to allow it to maintain a temperature of 89-91°C and viscosity checked through the hold (using the procedure described above with NMP) until a value of 11 to 15 poise was obtained. At 11 to 15 poise, 474 g of ethanol was added to the reactor and mixed thoroughly over several days. Approximately a minimum of at least 49 g were removed for the various samples of this step. Subsequently 7780 g was removed from the reactor and 2617 g of Propasol M added to the remaining material.

### PART D:

The non-volatile content of the material remaining in the reactor was determined [.2-.4 g sample at 105-115°C, with an appropriate solvent, for 3-4 hours (approximately 5 g were removed for this test)] to be 69-71 percent. The batch was heated to about 100°C while being vacuum stripped at about -2 to -9 inches of mercury gage. The refractive index of the distillate was monitored until it was greater than 1.4005 (at 20°C) after which distillation was stopped, 5829 g of Propasol M added, the batch cooled, and allowed to set overnight.

The batch was heated to 100 C and 410.7 g of N,N-dimethylaminoethanol was added. The batch was allowed to agitate with temperature between 99-101°C. for about 39 minutes.

The properties of the resin were 62-64 percent non-volatile [with an appropriate solvent such as toluene, and .2-.4 g sample at 105-115°C for about 60 minutes; 24-25 acid number based on the above non-volatile, reduced viscosity (to about 40.5 percent with NMP) of 13.6 poise using the I.C.I. Cone and Plate viscometer described above. Differences between determined non-volatile and theoretical are likely the result of losses during processing.

### EXAMPLE 5: Preparation of the Solvent Borne Metallic Paste

The following solvent borne metallic paste was prepared; 1250 g of Stapa VP 46432\G aluminum pigment from Obron Atlantic, and 355 g of propylene glycol monopropyl ether were added together and mixed to a uniform paste using a double planetary type mixer. After the desired mixing was achieved 396 g of the above described polyurethane resin in EXAMPLE 4 with a non-volatile of 63.7% was added to the mixture. The double planetary style mixer was again used to bring the mixture into a uniform paste. The paste has a final values of 40.6% pigment, 13.1% resin, 36.9% organic solvents, 9.4% water, 53.7% non-volatile, with a VOC of 0.54 kg/l (4.5lb\gal).

### EXAMPLE 6: Preparation of a Solvent Borne Metallic Paste

The following solvent borne metallic paste was prepared; 550 g of polyurethane resin from example 4 and 275 g isopropyl alcohol and 275 g of deionized water were added together and mixed to a uniform paste using a double planetary type mixer. After the desired mixing was achieved, 900 g of Mearl's 449X mica was then added and again mixed using the double planetary type mixer. The paste has a final values of 45.0% pigment, 17.1% resin, 24.2% organic solvents, 13.8% water, 62.1% non-volatile, with a VOC of 0.4212 kg/l (3.51b\gal).

### EXAMPLE 6: Preparation of Water Based Acrylic Latex Clear

A water based acrylic latex clear base was made by mixing with a Cowles blade 4 g Sanitizer 160,6 g Texanol ester-alcohol, 28 g propylene glycol tert-butyl ether, 163 g of deionized water, and 4 g 29% ammonium hydroxide. This mixture was added under agitation by a Cowles blade to a solution of 21 g of Rheolate 255 from Rheox, and 191 g of deionized water which had been milled using a vertical mill to the desired particle size. This was added as a let down solution to 352 g NeoCryl 640 and 143 g of NeoCryl 6037, both from ICI resins, which had also been mixed under a Cowles blade. To this solution, 87 g of ME00925, a wax dispersion from Michelman Inc., was added under agitation by a cowles blade. The above resulted in a mixture which contains 4.5% organic volatile, 71.1% water, 23.5% resin, 23.9% non-volatile, and a VOC of 0.168 kg/l (1.4 lb\gal).

### EXAMPLE 7: Preparation of the Water Borne Metallic base

A water borne metallic base for metal effect tinting can be produce by mixing 15% of the solvent borne metallic paste described above with 85% of the water based acrylic latex clear base described above by weight. The entire base is then mixed until homogenuous. The mixing can be achieved by hand or mechanically. This base has a non-volatile content of 28.4%, pigment level of 6.1%, 22.0% resin, 9.4% organic volatile, 61.9% water, and a VOC of 0.288 kg/l (2.4 lb\gal).

### EXAMPLE 8: Preparation of the Water Borne Pigmented Base

The following pigment slurry was prepared, 12.2 g of NeoCryl A-6037, 14.8 g of NeoCryl A-640, 0.3 g of 30% aqueous ammonia, 8.6 g of Perrindo Maroon R-6424 manufactured by Mobay Corporation, 0.2 g of a defoamer and 0.14 g of Solsperse 20,000 manufactured by ICI, and 11.1 g of deionized water. The above mixture was mixed together and predispersed using a Cowles blade. The mixture was then ground on a sand mill until the desired particle size was achieved. A let down solution containing 14.6 g of NeoCryl A-640, 0.61 g of Texanol, 8.41 g of propylene glycol t-butyl ether, 0.37 g of butyl benzyl phthalate, 0.14 g of a 1% solution of Surfynol 104 BC, 48.39 g of deionized water and a 25.25 g of a 10% Rheolate 255 solution add to the grind portion under agitation. The resulting water borne pigmented base had a pH of 8.7, a solids level of 18.7% by weight, a volatile organic level of 6.8% by weight, a binder level of 12.5% by weight, a pigment level of 5.8% by weight and a water level of 74.2% by weight. The 10% Rheolate 255 solution above is made by adding 10 g of Rheolate 255 to 90 g of deionized water.

### EXAMPLE 9: Preparation of the Water Borne Reducer Base

The reducer was made by adding to 342.73 g of deionized water, 3.55 g of P1010 manufactured by BASF. The resulting solution was then agitated for one half hour. To this solution 8.88 g of Laponite RD manufactured by Laporte Industries was added slowly. The entire solution is stirred for one hour. Then 236.84 g of deionized water was added to the solution and it was mixed for 30 minutes.

Under moderate agitation 286.2 grams of deionized water was added to 592 g of the above mixture. Under continued agitation 114.93 grams of the earlier described aqueous polyurethane dispersion of EXAMPLE 3 was added slowly added. To this solution, 6.87 g of a 1% FC-120 intermediate, which is made by mixing 92 g of deionized water, 4g of butyl cellusolve, 4 g of FC-120 surfactant made by 3M, was added. The resultant reducer has a clay level of 0.9% by weight, a resin level of 3.9% by weight, a volatile organic level of 0.9% by weight, a nonvolatile level of 4.8% by weight, a water level of 94.3% by weight and a VOC of 0.1836 kg/l (1.53 lbs/gal).

### EXAMPLE 10: Preparation of a Water Borne Red Metallic Basecoat

| Component | Parts by Weight |
|---|---|
| Water Borne Metallic base | 21.5 g |
| Water Borne Pigmented Base | 21.5 g |
| Water Borne Reducer Base | 57.0 g |

The above formula was used to prepare a red metallic base coat. The order of addition is that listed. After each introduction of a component, the entire solution was stirred. The base coat was sprayed on panels primed with a conventional epoxy primer using conventional spray equipment at 22.78 degree C (73 degree F) and relative humidity of 63% until hiding was achieved. The base coat was allowed to flash for 30 minutes after the last coat and then clear coated with a transparent coating based on isocyanate technology. The final properties of the base coat after coating with a conventional polyurethane clear coat are listed below, including appearance ratings.

| Properties of the Red Metallic Base Coat and Base Coat, Clear Coat System | |
|---|---|
| Property | Value |
| Water | 83.0 % |
| Volatile Organic | 4.0 % |
| Pigment | 3.1 % |
| Nonvolatile | 12.9 % |
| Binder | 9.6 % |
| Weight per Liter kg/l (Gallon) (lbs/gal) | 1.02 (8.5) |
| VOC kg/l (lbs/gal) | 0.264 (2.2) |
| Gloss, 20 deg | 92 |
| DOI | 87 |
| Adhesion | good |
| Film Thickness microns (mil) | 1.27 (0.5) |
| Humidity | good |
| Water Spray | excell. |
| Metal Control | excell. |

### EXAMPLE 11: Preparation of a Water Borne Silver Metallic Basecoat

| Component | Parts by Weight |
|---|---|
| Water Borne Metallic base | 43.0 g |
| Water Borne Reducer base | 57.0 g |

The above formula was used to prepare a silver metallic base coat. The order of addition is that listed. After each introduction of a component, the entire solution was stirred. The base coat was sprayed on panels primed with a conventional epoxy primer using conventional spray equipment at a temperature of 22.78 degree C (73 degree F) and relative humidity of 63% until hiding was achieved. The base coat was allowed to flash for 30 minutes after the last coat and then clear coated with a transparent coating based on isocyanate technology. The final properties of the base coat after coating with a conventional polyurethane clear coat are listed below, including appearance ratings.

| Properties of the Silver Metallic Base Coat and Base Coat, Clear Coat System | |
|---|---|
| Property | Value |
| Water | 80.4 % |
| Volatile Organic | 4.6 % |
| Pigment | 3.1 % |
| Nonvolatile | 15.0 % |
| Binder | 11.7 % |
| Weight per Liter kg/l (per Gallon lbs/gal) | 1.02 (8.5) |
| VOC kg/l (lbs/gal) | 0.264 (2.2) |
| Gloss, 20 | 93 |
| DOI | 86 |
| Adhesion | good |
| Film Thickness microns (mil) | 1.27 (0.5) |
| Humidity | good |
| Water Spray | excell. |
| Metal Control | excell. |

### EXAMPLE 12: Preparation of a Ready For Use Solvent Borne Refinish Paint using the Special Effect Pigmented Paste

| Component | Parts by Weight |
|---|---|
| Solvent Borne Metallic Paste (EXAMPLE 6) | 12.4 |
| BC100 | 50.9 |
| BC821 | 20.5 |
| BC800 | 8.2 |
| BC838 | 1.6 |
| BC830 | 4.2 |
| BC105 | 2.2 |
| BR50 | 100.0 |

A typical ready for use solvent borne automotive refinish paint has been prepared using the previously described solvent borne metallic paste and the above listed bases from BASF. The materials were weighed then hand stirred until uniform. This ready for use paint has final values of:

### Properties of the Ready For Use Solvent Based Metallic Base Coat

| Property | Value |
|---|---|
| Water | 85.2 % |
| Volatile Organic | 86.2 % |
| Pigment | 3.9 % |
| Nonvolatile | 12.9 % |
| Binder | 8.9 % |
| Weight per Liter kg/l (per Gallon lbs/gal) | 0.912 (7.6) |
| VOC kg/l (lbs/gal) | 0.792 (6.6) |
| Film Thickness microns (mil) | 1.143 (0.45) |
| Humidity | good |
| Water Spray | excell. |
| Metal Control | excell. |

This paint was sprayed onto a full size car shell using a Binks HVLP spray gun with a 97S tip and a 95AS cap. Line pressure was 4.83 bar (70 psi), feed adjustment was 3.5 turns and fan adjustment was full. The paint sprayed very good and was excellent for use for both repairing and full body painting.

## Claims

1. A water borne metallic basecoat kit composition consisting essentially of:
a) a water borne metallic base consisting essentially of:
i) a solvent borne metallic paste,
ii) a water borne acrylic latex clear base,
b) a water borne pigmented base containing a water borne acrylic latex resin and,
c) a water borne reducer base containing a rheology control agent.

2. The basecoat kit composition of claim 1 wherein the water borne metallic base consists essentially of:
a) solvent borne metallic paste consisting essentially of:
i) solvent borne water reducible resin,
ii) metallic pigment,
iii) organic solvent,
iv) wax and,
v) amine.
b) a water borne, acrylic latex clear base consisting essentially of:
i) water borne acrylic latex resin,
ii) organic solvents,
iii) wax,
iv) amine,
v) thickener and,
vi) water.

3. The basecoat kit composition of claim 1 wherein the water borne metallic base consists essentially of:
a) solvent borne metallic paste consisting essentially of:
i) solvent borne water reducible resin,
ii) solvent borne aluminum flake,
iii) organic solvent,
iv) wax and,
v) amine.
b) a water borne acrylic latex clear base consisting essentially of:
i) water borne acrylic latex resin,
ii) organic solvents,
iii) wax,
iv) amine,
v) thickener and,
vi) water.

4. The basecoat kit composition of claim 1 wherein the water borne metallic base consists essentially of:
a) solvent borne metallic paste consisting essentially of:
i) solvent borne water reducible resin,
ii) aluminum flake treated for water stability,
iii) organic solvent,
iv) wax and,
v) amine.
b) a water borne acrylic latex clear base consisting essentially of:
i) water borne acrylic latex resin,
ii) organic solvents,
iii) wax,
iv) amine,
v) thickener and,
vi) water.

5. The basecoat kit composition of claim 1 wherein the water borne metallic base consists essentially of:
a) solvent borne metallic paste consisting essentially of:
i) solvent borne water reducible resin,
ii) a mica pigment,
iii) organic solvent,
iv) wax and,
v) amine.
b) a water borne acrylic latex clear base consisting essentially of:
i) water borne acrylic latex resin,
ii) organic solvents,
iii) wax,
iv) amine,
v) thickener and,
vi) water.

6. The basecoat kit composition of anyone of the claims 1 to 5 wherein the water based pigmented base consists essentially of:
a) water borne acrylic latex resin,
b) pigment,
c) organic solvent,
d) thickener,
e) wax and,
f) water.

7. The basecoat kit composition of anyone of the claims 1 to 6 wherein the water based reducer base consists essentially of:
a) rheology control agent,
b) polypropylene glycol,
c) water borne resin,
d) organic solvents,
e) water and,
f) wax.

8. A method of forming a water borne metallic basecoat paint composition from a water borne basecoat kit consisting essentially of mixing:
a) water borne metallic base,
b) water borne pigmented base and,
c) water borne reducer base.

9. The method of forming a water borne metallic basecoat paint composition of claim 8 wherein the water borne metallic base consisting essentially of mixing:
a) a solvent borne metallic paste consisting essentially of:
i) solvent borne water reducible resin,
ii) metallic pigment,
iii) organic solvent,
iv) wax and,
v) amine.
b) a water borne acrylic latex clear consisting essentially of:
i) water borne acrylic latex resin,
ii) organic solvents,
iii) wax,
iv) amine,
v) thickener and,
vi) water.

10. The method of forming a water borne metallic basecoat paint composition of claim 8 wherein the water borne metallic base consisting essentially of mixing:
a) a solvent borne metallic paste consisting essentially of:
i) solvent borne water reducible resin,
ii) solvent borne aluminum flake,
iii) organic solvent,
iv) wax and,
v) amine.
b) a water borne acrylic latex clear consisting essentially of:
i) water borne acrylic latex resin,
ii) organic solvents,
iii) wax,
iv) amine,
v) thickener and,
vi) water.

11. The method of forming a water borne metallic basecoat paint composition of claim 8 wherein the water borne metallic base consisting essentially of mixing:
a) a solvent borne metallic paste consisting essentially of:
i) solvent borne water reducible resin,
ii) aluminum flake treated for water stability,
iii) organic solvent,
iv) wax and,
v) amine.
b) a water borne acrylic latex clear consisting essentially of:
i) water borne acrylic latex resin,
ii) organic solvents,
iii) wax,
iv) amine,
v) thickener and,
vi) water.

12. The method of forming a water borne metallic basecoat paint composition of claim 8 wherein the water borne metallic base consisting essentially of mixing;
a) a solvent borne metallic paste consisting essentially of:
i) solvent borne water reducible resin,
ii) mica
iii) organic solvent,
iv) wax and,
v) amine.
b) a water borne acrylic latex clear consisting essentially of:
i) water borne acrylic latex resin,
ii) organic solvents,
iii) wax,
iv) amine,
v) thickener and,
vi) water.

13. The method of forming a water borne metallic basecoat paint composition of anyone of the claims 8 to 12 wherein the water borne pigmented base consisting essentially of:
a) water borne acrylic latex resin,
b) pigment,
c) organic solvent,
d) thickener,
e) wax and,
f) water.

14. The method of forming a water borne metallic basecoat paint composition of anyone of the claims 8 to 13 wherein the water borne reducer bass consisting essentially of:
a) rheology control agent,
b) polypropylene glycol,
c) water borne resin,
d) organic solvents,
e) water and,
f) wax.

15. A method of forming a water borne metallic base composition from essentially mixing:
a) a solvent borne metallic paste,
b) a water based acrylic latex clear.

16. The method of forminq a water borne metallic base composition of claim 15 wherein the solvent borne metallic paste consists essentially of:
a) solvent borne water reducible resin,
b) metallic flake,
c) organic solvent,
d) wax and,
e) amine.

17. The method of forming a water borne metallic base composition of claim 15 wherein the solvent borne metallic paste consists essentially of:
a) solvent borne water reducible resin,
b) solvent borne aluminum,
c) organic solvent,
d) wax and,
e) amine.

18. The method of forming a water borne metallic base composition of claim 15 wherein the solvent borne metallic paste consists essentially of:
a) solvent borne water reducible resin,
b) aluminum flake treated for water stability,
c) organic solvent,
d) wax and,
e) amine.

19. The method of forming a water borne metallic base composition of claim 15 wherein the solvent borne metallic paste consists essentially of:
a) solvent borne water reducible resin,
b) mica,
c) organic solvent,
d) wax and,
e) amine.

20. The method of forming a water borne metallic base composition of anyone of the claims 15 to 19 wherein the water based acrylic latex clear consists essentially of:
a) water borne acrylic latex resin,
b) organic solvents,
c) wax,
d) amine and,
e) water.

21. A solvent borne metallic basecoat kit composition consisting essentially of:
a) a solvent borne metallic bass consisting essentially of:
i) a solvent borne metallic paste,
ii) a solvent borne clear base,
b) a solvent borne pigmented base and,
c) a solvent borne reducer base.
